# EUROPEAN PATENT APPLICATION

(11) **EP 2 551 775 A1**
(43) Date of publication of application: **30.01.2013**
(21) Application number: 11761954.4
(22) Date of filing: 15.03.2011
(51) Int. Cl.: G06F 13/10

(54) **PRINTER WITH UNIVERSAL SERIAL BUS INTERFACE, METHOD AND SYSTEM FOR INSTALLING DRIVER OF PRINTER**

(30) Priority: 01.04.2010 CN 201010137547
(71) Applicant: Shandong New Beiyang Information Technology Co., Ltd., Weihai, Shandong 264209 (CN)
(72) Inventor: LEEUWEN, Adrianus·Jacobus·Antonia·Maria·Van, Weihai Shandong 264209 (CN); WANG, Chuntao, Weihai Shandong 264209 (CN); GUO, Zongsheng, Weihai Shandong 264209 (CN); XING, Yanbin, Weihai Shandong 264209 (CN)
(74) Representative: South, Nicholas Geoffrey
(86) International application number: PCT/CN2011/071813
(87) International publication number: WO 2011/120380

(57) **Abstract**

The invention discloses a printer with a Universal Serial Bus (USB) interface, and its driver installing method and system, wherein the printer with the USB interface includes a USB interface and a printing mechanism and further includes: a controller, 5 and a first memory connected with the controller and storing a driver of the printer, wherein the first memory further stores a device identification, wherein the type of the device identification includes a memory device identification and a printing device identification. By using the invention, a driver of a USB device can be installed conveniently.

## Description

### Technical field of the invention

The invention relates to the printing field, and more particularly to a printer with a Universal Serial Bus (USB) interface, and its driver installing method and system.

### Background of the invention

In recent years, printing devices using USB to connect Personal Computers (hereinafter referred to as computer or PC to facilitate description) has become the mainstream gradually. Point of Sale (POS) printers in particular, which are broadly applied in the retail industry and the catering industry, only need to use printing device drivers provided by operation systems instead of installation of special printer drivers if merely general functions such as data printing and simple state monitoring etc. of the printers are used when communicating with PCs. If all functions of the printers need to be used and if the currently-applied POS printers provide many functions such as real-time state query and automatic state returning etc., special USB device drivers provided by printer manufacturers need to be installed. Currently, the following method is commonly used for installing a printer driver: the printer driver is installed by using a computer Compact Disc Read-Only Memory (CD-ROM) through a Compact Disc (CD) carrying a driver. The used CD carrying the driver is large in size and not easy to carry while increasing the cost of accessories of the printer.

A method is put forward in related technologies to add a USB hub in a USB device. When connected to a printer, the USB device is identified as 2 devices: a USB memory and a printing device, which are two independent devices. A driver of the printing device is stored in the USB memory, and a USB driver of the printing device is installed by accessing the driver in the USB memory. The printing device is used after the USB device is installed. Although such a solution can avoid carrying a CD by a user and the USB driver is stored in the USB device itself, the USB hub and the USB memory independent of the printing device are added in the printing device, which increases the cost of the printing device. In addition, the printing device fails to manage the storage area of the USB memory device, which causes waste of the idle memory area of the USB memory.

Currently, there are no effective solutions for solving the problem of inconvenience in installing a driver of a USB device in related technologies.

### Summary of the invention

The invention is put forward to solve the problem of inconvenience in installing a driver of a USB device. Therefore, the main purpose of the invention is to provide a printer with a USB interface, and its driver installing method and system to solve the problem above.

To realize the purpose above, a printer with a USB interface is provided according to an aspect of the invention.

The printer with the USB interface according to the invention includes: a USB interface and a printing mechanism, and further includes: a controller and a first memory connected with the controller and storing a driver of the printer, wherein the first memory further stores a device identification, wherein the type of the device identification includes a memory device identification and a printing device identification.

Further, the printer includes: an input mechanism connected with the controller and configured to receive a signal inputted by a user to enable the controller to modify the type of the device identification in the first memory. The input mechanism may be a manual input mechanism such as a push button mechanism, and may be also an external mechanism such as a dedicated application input mechanism.

Further, the type of the default device identification in the first memory is the memory device identification.

Further, the printer is connected to a computer by the USB interface, wherein after the driver is installed by the computer, the printer modifies the type of the device identification to be a printing device identification.

Further, the first memory is set inside or outside the printer. In the case that it is set outside the printer, the first memory is connected to the printer by an external interface of the printer.

Further, the first memory further stores a product information file of the printer, or the printer further includes: a second memory, connected to the printer by the external interface of the printer and storing the product information file and/or the driver of the printer.

To realize the purpose above, a driver installing method of a printer with a USB interface is provided according to another aspect of the invention.

The driver installing method of the printer with the USB interface according to the invention includes: when connected to a computer, the printer is identified as a memory device or a printing device, wherein the printer stores a device identification, wherein the type of the device identification includes a memory device identification and a printing device identification. In the case that the printer is identified as a memory device, the computer installs a driver stored in the printer.

Further, the device type of the printer is modified by a signal inputted by a user, wherein the device type includes a memory device or a printing device.

Further, when the printer is connected to the computer for the first time, the device type of the printer is a memory device. After the driver is installed by the computer, the method further includes: the computer modifies the device type of the printer to be a printing device.

Further, when the printer is connected to the computer, the method further includes: in the case that the printer is identified as a memory device, the computer determines whether or not to install the driver in the printer. If the determination result is yes, the computer installs the driver and modifies the device type of the printer to be a printing device. If the determination result is no, the computer does not modify the device type of the printer, and the printer establishes communication with the computer to execute a predetermined operation.

Further, the method includes: the printer receives a control signal inputted by the user and modifies the device type through the control signal.

To realize the purpose above, a driver installing system of a printer with a USB interface is provided according to a third aspect of the invention.

The driver installing method of the printer with the USB interface of the invention includes: a computer and a printer connected with the computer by the USB interface, wherein the computer identifies the printer as a memory device or a printing device. In the case that the printer is a memory device, a driver stored in the printer is installed.

The invention applies a printer with a USB interface with the following structure, comprising: a controller and a first memory connected with the controller and storing a driver of the printer, wherein the first memory further stores a device identification, wherein the type of the device identification includes a memory device identification and a printing device identification. Since two types of device identifications are stored in the first memory, the printer is identified as a memory device or a printing device when connected to a computer, wherein when the printer is identified as a memory device, the computer can install the driver stored in the printer. Therefore, the invention solves the problem of inconvenience in installing a driver of a USB device, thus installing the driver of the USB device conveniently.

### Brief description of the drawings

The accompanying drawings illustrated here provide further understanding to the invention and constitute a part of the application. The exemplary embodiments of the invention and the illustrations thereof are used for explaining the invention, instead of constituting an improper limitation to the invention. In the accompanying drawings:
Fig. 1 is a block diagram illustrating internal composition of a printer according to the first embodiment of the invention;
Fig. 2 is a schematic diagram illustrating memory area distribution of a FLASH memory in a printer according to an embodiment of the invention;
Fig. 3 is another schematic diagram illustrating memory area distribution of a FLASH memory in a printer according to an embodiment of the invention;
Fig. 4 is a flowchart illustrating a driver installing method of a printer with a USB interface according to an embodiment of the invention;
Fig. 5 is a flowchart illustrating communication of a computer and a printer according to the first embodiment of the invention;
Fig. 6 is a flowchart illustrating communication of a computer and a printer according to the second embodiment of the invention;
Fig. 7 is a program flowchart of a communication process between a computer and a printer according to an embodiment of the invention;
Fig. 8 is a block diagram illustrating internal composition of a printer according to the second embodiment of the invention; and
Fig. 9 is a schematic diagram illustrating memory area distribution of an external memory of a printer according to an embodiment of the invention.

### Detailed description of the embodiments

It should be noted that, if there is no conflict, the embodiments of the application and the characteristics in the embodiments can be combined with one another. The invention will be described in details below with reference to the reference accompanying drawings and in combination with the embodiments.

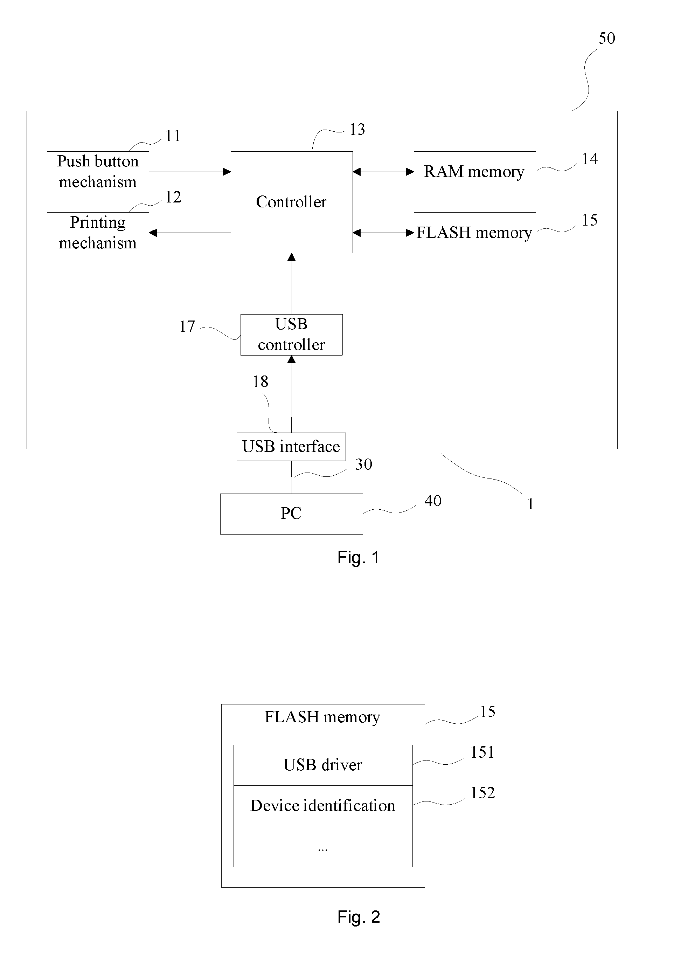

Fig. 1 is a block diagram illustrating internal composition of a printer according to the first embodiment of the invention.

As shown in Fig. 1, the printer with a USB interface according to an embodiment of the invention includes a USB interface 18 and a printing mechanism 12, and further includes: a controller 13 and a first memory (e.g. a FLASH memory) 15 connected with the controller 13 and storing a driver of the printer, wherein the first memory 15 further stores a device identification, wherein the type of the device identification includes a memory device identification and a printing device identification.

In this embodiment, either the memory device identification or the printing device identification is identified as an enabled state, wherein when the memory device identification is identified as the enabled state, the printing device is identified as a memory device. At the moment, a computer may install the driver stored in the memory device. In the case that the printing device identification is identified as the enabled state, the printer is identified as a printing device. At the moment, the printer may be enabled to execute a printing operation etc. By this embodiment, the driver of the printer can be installed conveniently.

As shown in the figure, the printer 50 communicates with the computer 40 via a USB communication cable 30, forming a printing system 1 together. As shown in the figure, the printer includes the controller 13, an input mechanism (including a push button mechanism or a touch screen mechanism etc., taking the example of the push button mechanism hereinafter) 11, a printing mechanism 12, a RAM memory 14, a FLASH memory 15 and a USB controller 17, wherein the input mechanism 11 is configured to perform various operations including configuration and testing etc. for the printer, such as modifying the device identification (also known as a device identifier) of the printer and printing a testing pattern sheet of a printing head etc. The printing mechanism 12 includes: a printing head, a printing head driving circuit and a medium transmitting mechanism etc., which are not shown in the figure. The printing head is controlled by a printing head control circuit to print on a medium which is transmitted by the medium transmitting mechanism. Printing data and printer state data etc. transmitted by the computer are stored in the RAM memory 14 temporarily. The FLASH memory 15 not only stores such information as a control program, a word library and a code page etc. of the printer, but also stores a USB driver of the printer, the device identifier of the printer, and other files such as a product information file of the printer itself etc. The USB controller controls the communication between the printer and the computer, including establishment of USB communication, device configuration of the printer, and transmission of various data etc. The controller 13 controls other parts of the printer, to complete the establishment of the USB communication, the data transmission, data printing and medium transmission of the printer together with the controller.

Fig. 2 is a schematic diagram illustrating memory area distribution of a FLASH memory of a printer. As shown in the figure, the FLASH memory 15 stores a USB driver 151 and a device identification 152 of the printer, wherein the USB driver is a printing device driver of the printer. When the printer is connected to a computer as a memory device (i.e. the printer is identified as a memory device by the computer), the computer may read and install the USB driver. The device identification of the printer represents the device type of the printer when the printer establishes USB communication with the computer, i.e. the printer establishes communication with the computer as a memory device or a printing device. Preferably, the default device type of the printer is a memory device, only when the device type is modified by the computer from a memory device to a printer device after the USB driver of the printer is installed on the computer to the use the printing device for the first time, the driver may be installed conveniently and the printer may be enabled to communicate with the computer as a printing device after installing the driver (i.e. the printer is identified by the computer as a printing device) to execute a printing operation. In addition, the device type of the printer may be also modified by a push button mechanism (an enabled state of the device identification in the printer is modified), so as to facilitate a user to modify the device type of the printer.

The input mechanism may be also a dedicated application input mechanism. The device type of the printer may be modified by the dedicated application input mechanism using a dedicated application installed by the computer, e.g. when the printer is a printing device, the application modifies the device identification of the printer by sending a control command to the printer by the computer. When the printer is a memory device, the application modifies the device type of the printer by modifying the content of a device identification file in the memory device. Preferably, the dedicated application is stored in the FLASH memory 15.

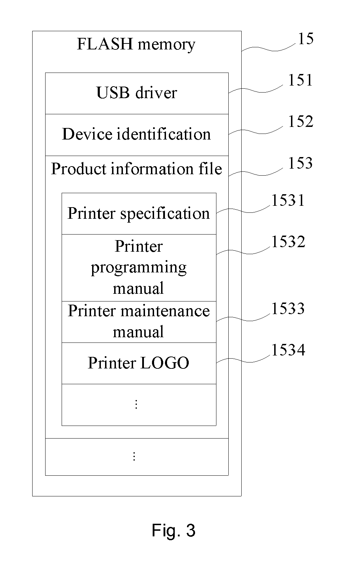

Fig. 3 is another schematic diagram illustrating memory area distribution of a FLASH memory in a printer according to an embodiment of the invention.

As shown in Fig. 3, besides a USB driver 151 and a device identification 152 of the printer, the FLASH memory further stores a product related information file 153, e.g. a printer specification 1531, a printer programming manual 1532, a printer maintenance manual 1533 and a printer logo 1534 etc.

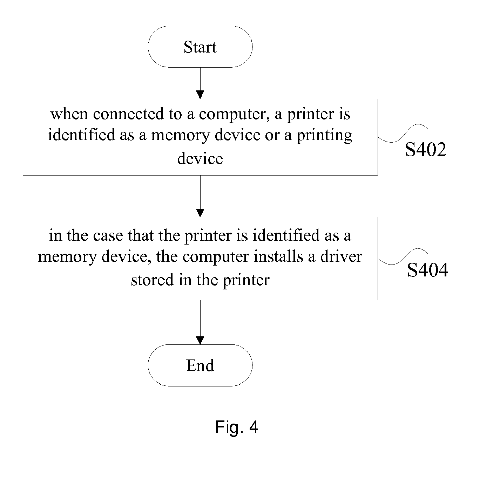

Fig. 4 is a flowchart illustrating a driver installing method of a printer with a USB interface according to an embodiment of the invention.

As shown in Fig. 4, the method includes the following steps:
Step S402: when connected to a computer, the printer is identified as a memory device or a printing device, wherein the printer stores a device identification, wherein the type of the device identification includes a memory device identification and a printing device identification. When the memory device identification is identified as an enabled state, the printer is identified as a memory device. When the printing device identification is identified as an enabled state, the printer is identified as a printing device, wherein in the case that the printer is identified as a printing device, the computer is able to communicate with the printing device to perform a printing operation. When the printer is identified as a memory device, the computer is able to read data stored in the memory device and manage the data in the memory device.
Step S404: in the case that the printer is identified as a memory device, the computer installs a driver stored in the printer.

Through the embodiment above, a computer-identified device type of the printer can be switched between a memory device and a printing device, thus installing the driver of a USB device conveniently without carrying a CD by a user. In addition, the data in the memory device of the printer can be managed.

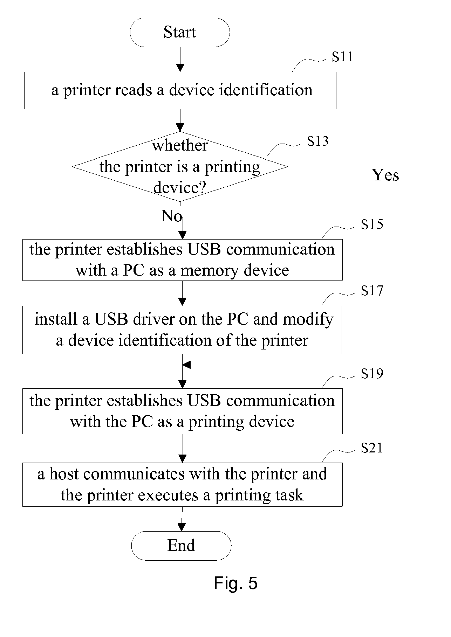

Fig. 5 is a flowchart illustrating communication of a computer and a printer according to the first embodiment of the invention.

An installation process of a USB driver is described below according to Fig. 5.
Step S11: a printer reads a device identification.

After the printer is powered on and before the communication is established with the computer, the device type of the printer needs to be determined first. There are two device types of the printer, i.e. a printing device and a memory device, respectively. The device type of the printer is distinguished by the device identification 152 in a FLASH memory 15. It is provided that the device type of the printer is a memory device when the device identification 152 is "0" and the device type of the printer is a printing device when the device identification 152 is "1". Each time the printer establishes USB communication with the computer, only one device type can be selected, either a printing device or a memory device.
Step S13: determine the device type of the printer.

After the printer reads the device identification 152, the device type of the printer is a memory device when the read information is "0", and the device type of the printer is a printing device when the read information is "1". If the printer is a printing device, go to Step S19 to continue processing. If the printer is a memory device instead of a printing device, go to Step S15 to perform processing.
Step S15: the printer establishes USB communication with the computer as a memory device.

When the USB communication is established between the computer and the printer, the USB printer is determined to be a memory device by a bDeviceClass field in a device descriptor which is returned by responding to a GET_DESCRIPTOR (device) request of the computer by the printer. The content of the bDeviceClass field is determined by the device identification 152 of the printer. When the computer determines that the printer is a memory device, a file in the FLASH memory of the printer can be accessed by using a memory USB driver provided in the computer directly instead of installing a special USB memory device driver on the computer.
Step S17: install a USB driver on the computer and modify the device identification of the printer.

If the USB driver is installed automatically, a USB driver installation interface will pop up automatically on a computer screen. The installation is performed automatically according to tips on the installation interface. After the installation, an installation program will modify the device type of the printer automatically and the device identification does not need to be modified manually.

If the installation of the USB driver is not desired on the computer, or an operation system of the computer does not allow the automatic installation of the USB driver, the driver can be installed by reading the USB driver 151 stored in the FLASH memory 15 of the printer. The device identification 152 stored in the FLASH memory 15 needs to be modified after the installation of the USB driver. The printer can determine that the USB driver has been installed on the computer only after the device identification of the printer is modified. If the installation of the USB driver on the computer ended without modifying the device type of the printer, the device type of the printer can be modified manually, e.g. a configuration menu of the printer is selected by a push button mechanism 11 or the device type is modified by key-pressing. If the printer is provided with a display mechanism e.g. a LCD display (not shown in Fig. 1), a menu can be displayed by the display mechanism. The printer may be also configured by printing the configuration menu on a medium.
Step S19, the printer establishes USB communication with the computer as a printing device.

After the printer determines itself to be a printing device by detecting the device identification, the following operations are performed: 1) the printer resets a USB interface immediately, i.e. a D+ signal sent to the USB interface 18 is changed from a pull-up state into a high impedance state, and after the computer detects the change of the D+ signal, it is determined that the printer identified as a memory device has been disconnected from the computer; 2) the printer waits for a certain period of time; 3) the printer sets the D+ signal and changes the D+ signal of the USB interface from the high impedance state to the pull-up state. When the computer detects that the D+ signal is changed from the high impedance state to the pull-up state, it is considered that a new USB device is connected to the USB interface. Subsequently, the computer starts a USB communication establishment process with the printer. During the communication establishment process, the USB printer is determined to be a printing device by a bDeviceClass field in a device descriptor which is returned by responding to a GET_DESCRIPTOR (device) request of the computer by the printer. The content of the bDeviceClass field is determined by the device identification 152 of the printer, and the device identification 152 of the printer has been changed from a memory device to a printing device after the USB driver is installed on the computer. Printing-related operations can be performed after the computer establishes the USB communication with the printer, e.g. printing data transmission, inquiring printer's state etc.

After the printer is powered on and if the device identification thereof is a printing device, the operation 3) above is performed directly to establish USB the communication with the computer when the printer is connected to the computer via the USB interface 18.
Step S21: the computer communicates with the printer and the printer executes a printing task.

After the printer establishes the USB communication with the computer as a printing device, the installed USB driver can be invoked to transmit data to the printer which receives the printing data and executes the printing task.

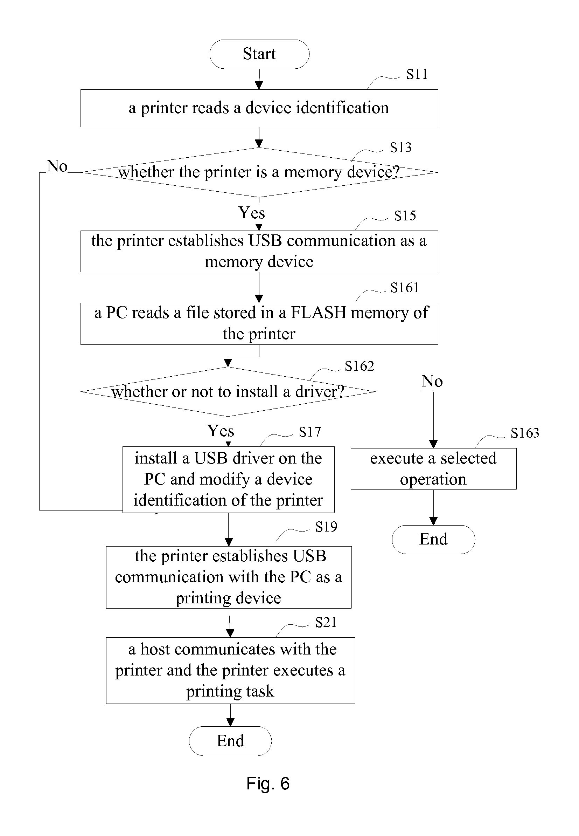

Fig. 6 is a flowchart illustrating communication of a computer and a printer according to the second embodiment of the invention and Fig. 3 is another schematic diagram illustrating memory area distribution of a FLASH memory in a printer. Another embodiment of communication of a computer and a printer of the invention is described according to Fig. 3 and Fig. 6. As shown in Fig. 3, besides a USB driver and a printing device identification, the FLASH memory in the printer further stores other files such as product information 153 etc. of the printer, wherein product information 153 of the printer includes: a printer specification 1531, a printer programming manual 1532, a printer maintenance manual 1533 and a printer logo 1534 etc. The quantity of memory files is determined by the size of the memory capacity of the FLASH memory of the printer. A larger memory capacity of the FLASH memory may store more files. In such a case, a communication process of the computer and the printer is as shown in Fig. 6. Except that Step S161, Step S162 and Step S163 are added, the installation process of Fig. 6 is same as that of Fig. 5.
Step S161: the computer reads files in the FLASH memory of the printer.

The computer reads all accessible files including a USB driver in the FLASH memory of the printer, e.g. looking up product information of the printer etc. Storing various files in the FLASH memory can not only save a CD of a printer driver, but also save a CD for storing the product information of the printer. In a preferred embodiment, an automatic running program is set in the FLASH memory. After the printer establishes USB communication with the computer as a memory device, an interface which displays options such as driver installation, browsing user manual and browsing printer configuration etc. to be selected by an operator is run on the computer automatically.
Step S162: determine whether or not to install the driver.

After the printer establishes USB communication with the computer as a memory device, whether or not to install the USB driver on the computer is determined. If so, go to Step S17 to perform processing. Otherwise, processing is performed according to Step S163.
Step S163: execute a selected operation.

If the computer does not install the USB driver, the device identification of the printer is not modified, and the printer is always connected with the computer as a memory device. The computer may read or modify a file in the FLASH memory and execute the selected operation. When the printer establishes USB communication with the computer next time, the printer is still identified as a memory device.

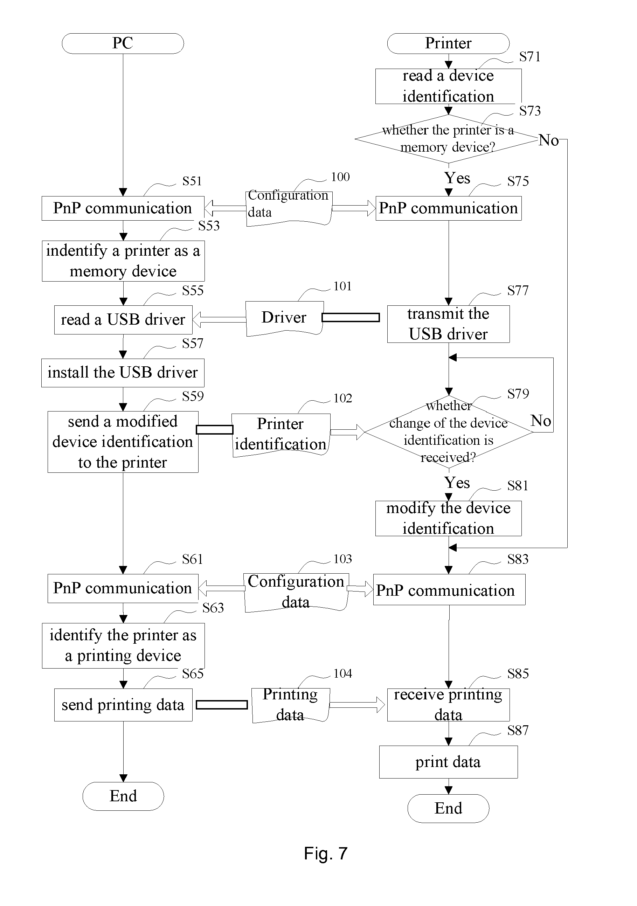

Fig. 7 is a program flowchart of a communication process between a computer and a printer according to an embodiment of the invention.

The communication process between the computer and the printer is described below according to Fig. 7.

As shown in Fig. 7, the communication process between the computer and the printer is performed interactively. The arrow ' 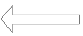 ' in the figure represents the direction of interactive data between the computer and the printer. Firstly, the operation of the computer 40 is described.

When the printer is a memory device, the steps from S51 to S59 are performed. When the printer is a printing device, the steps from S61 to S65 are performed. Since the computer cannot determine whether the printer accessed from a USB interface is a memory device or a printing device, the computer cannot also directly determine whether to start with Step S51 or Step S61, and can determine whether to start with Step S51 or Step S61 only by the device type of the accessed printer during Plug and Play (PnP) communication.
Step S51: perform PnP communication of the USB interface on the computer.

When the printer is connected to the computer by the USB interface 18, a D+ signal of the interface is changed from a high impedance state to a pull-up state. When the computer detects that the D+ signal of the USB interface is changed from the high impedance state to the pull-up state, it is indicated that a USB device is connected to the computer. Subsequently, USB communication is established between the computer and the printer. Multiple requests including a GET_DESCRIPTOR(device) are transmitted by computer. The device type of the USB printer is determined by a bDeviceClass field in a device descriptor returned by the printer.

Step S53: the printer is identified as a memory device. When the USB communication is established between the computer and the printer, the printer returns multiple descriptors in order to respond to the requests of the computer, e.g. a device descriptor, a configuration descriptor and an interface descriptor etc., wherein the device type of the USB printer is determined to be a memory device by the bDeviceClass field in the device descriptor.

Step S55, read a USB driver. The computer must read the USB driver first when installing the USB driver. If installed automatically, the USB driver is read by an installation program run on the computer. If the USB driver is installed manually, an operator needs to read the USB driver from a FLASH memory 15 in the printer.

Step S57: install the USB driver. The computer installs the USB driver after reading the USB driver. The USB driver may be installed automatically or manually.

Step S59: send a modified device identification to the printer. The computer needs to modify the device identification of the printer after installing the driver. If the driver is installed automatically, the device identification of the printer is modified automatically by an automatic installation program. If the driver is installed manually, the device identification of the printer needs to be modified manually. The computer sends modification information of the device identification to the printer, as shown by a printer identification 102.
Step S61: perform the PnP communication of the USB interface on the computer.

After detecting that the device identification is modified, the printer initiates the PnP communication. The computer determines the plug-in or removal of the USB device according to the change of the D+ signal of the USB interface. When the computer detects that the D+ signal of the USB interface is changed from the pull-up state to the high impedance state, it is considered that the device with the USB interface has been removed. When the computer detects that the D+ signal of the USB interface is changed from the high impedance state to the pull-up state, it is considered that a new device is plugged in the USB interface and the computer initiates a USB communication establishment process. The device type of the printer is determined as a printing device by the bDeviceClass field in the device descriptor returned by the printer.
Step S63: identify the printer to be a printing device.

When the USB communication is established between the computer and the printer, multiple descriptors are returned to respond to the requests of the computer. The device type of the USB printer is determined to be a printing device by the bDeviceClass field in the returned device descriptor.

Step S65: transmit printing data. After the USB communication is established between the computer and the printer, the printing data 104 may be transmitted from computer to the printer which performs data printing. At the same time, related operations from Step S71 to Step S87 are performed on the printer 50, which is described as follows specifically:
Step S71: the printer reads the device identification.

Before the USB communication is established between the printer and the computer, the device type of the printer needs to be determined first. The device type of the printer is distinguished by the device identification 152 in the FLASH memory 15. It is provided that the device type of the printer is a memory device when the device identification 152 is "0" and the device type of the printer is a printing device when the device identification 152 is "1". The default device type of the printer is a memory device when dispatched from the factory, so that the computer can install the driver by accessing the USB driver 152 stored on the FLASH memory 15 in the printer as a memory device when the printer is connected to the computer for the first time.
Step S73: determine the device type of the printer.

After the printer reads the device identification 152, it is indicated that the device type of the printer is a memory device when the read information is "0", and it is indicated that the device type of the printer is a printing device when the read information is "1". If the device type of the printer is a memory device, subsequent processing is performed according to Step S73. If the device type of the printer is a printing device, go to Step S83 to perform processing.
Step S75: the PnP communication of the USB interface is performed on the printer. It is indicated by changing the state of the D+ signal of the USB interface from the high impedance state to the pull-up state by the printer, that the printer has been connected to the USB interface of the computer. When the computer detects that the state of the D+ signal of the USB interface has been changed from the high impedance state to the pull-up state, it is indicated that a USB device is connected to the computer and the computer starts to communicate with the USB device, i.e. PnP communication. During the communication establishment process, the computer acquires configuration data 100 of the printer and determines that the device type of the USB printer is a memory device by the bDeviceClass field in the device descriptor of the printer.
Step S77: transmit the USB driver. After the printer establishes the USB communication with the computer as a memory device, the computer can access the USB driver 151 in the FLASH memory of the printer which transmits the USB driver 101 to the computer via a USB cable 30.
Step S79: the printer determines whether or not the modification information of the printer identification is received. If the printer receives the modification information 102 of the device identification sent by the computer, Step S81 is performed. Otherwise, the printer keeps waiting for the modification information of the device identification.
Step S81: the printer modifies the device identification. After receiving the modification information of the device identification from the computer, the printer modifies the device identification of the printer from a memory device to a printing device. The device identification of the printer will not be lost after the printer is powered off. After the device identification of the printer is modified, the USB communication needs to be established with the computer over again.
Step S83: the PnP communication is performed over again between the computer and the printer. Firstly, by changing the state of the D+ signal of the USB interface (from the pull-up state to the high impedance state) at the printer, it is indicated that the printer connected with the computer as a memory device have been removed from the USB interface. After waiting for a certain period of time, the printer changes the state of the signal D+ of the USB interface (from the high impedance state to the pull-up state) over again to indicate the computer that a new USB device is plugged in. When detecting that the new USB device is plugged in, the computer initiates a USB communication establishment process. During the communication establishment process, the computer requests for the configuration data 103 of the printer and determines that the printer is a printing device by the bDeviceClass field in the device descriptor in the configuration information. The printer can receive printing data and print it after the communication is established between the printer and the computer.
Step S85: the printer receives the printing data. After establishing the USB communication with the computer as a printing device, the printer receives the printing data 104 sent by the computer as a common printer.
Step S87: the printer prints the printing data. After receiving the printing data, a printing mechanism of the printer prints the printing data on a medium.

To sum up, the computer 40 determines the device type of the printer when establishing the USB communication with the printer 50, while the device type of the printer is controlled by the device identification in the FLASH memory 15 of the printer. The default device identification of the printer is a memory device when dispatched from the factory. In this way, when the printer is connected with the computer for the first time, the computer can perform operations such as installation of the USB driver, browsing user manual and browsing printer configuration etc. by accessing the FLASH memory 15 of the printer which serves as a memory device. After the USB driver of the printer is installed on the computer, the computer modifies the device identification of the printer. After the printer detects that the device identification is modified, the printer disconnects the USB connection with the computer automatically and establishes the USB communication over again with the computer after waiting for a certain period of time. When reconnected with the computer, the printer communicates with the computer as a printing device and is able to execute a printing task directly. Therefore, the printer and the driver installing method provided by the invention can perform operations including installing a printer driver, and looking up a user manual and printing configuration etc. without setting a CD additionally, which is convenient, simple and more user-friendly.

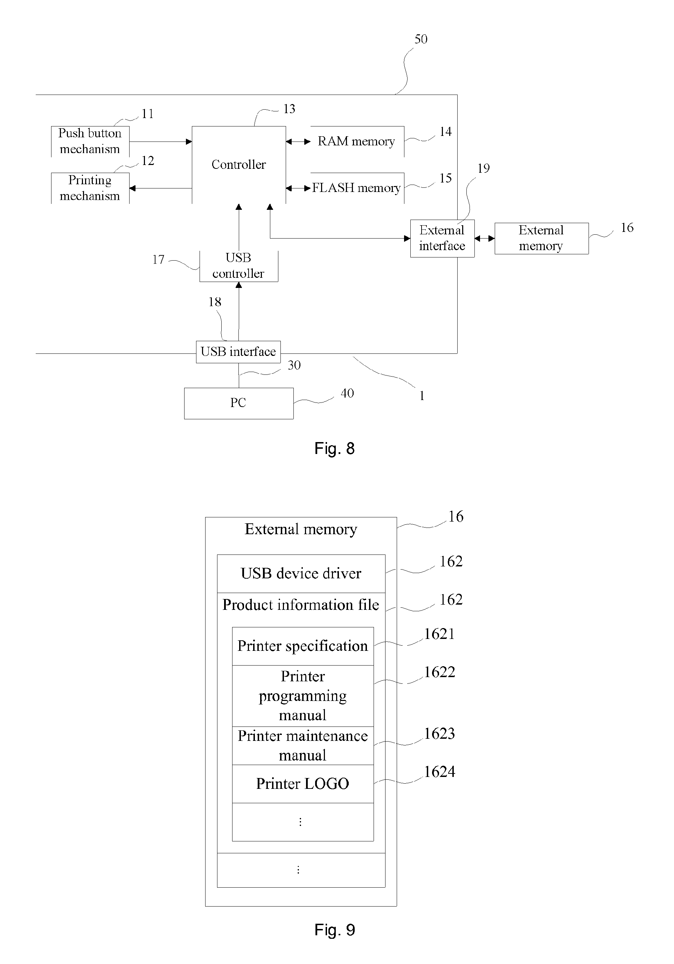

The printer can be also provided with a second memory device (an external memory device, or a second memory) to store a printer driver and/or a product information file to enlarge the memory capacity, and so that the device can be used more easily. Fig. 8 and Fig. 9 together describe device composition of a printer carrying an external memory and memory area distribution of the external memory.

Fig. 8 is a block diagram illustrating internal composition of a printer provided with an external memory. Besides the description below, other parts of the composition of the printer in Fig. 8 and Fig. 1 are the same.

As shown in Fig. 8, the printer 50 further includes the external memory 16 which may be a memory device such as a memory card etc. When the external memory of the printer is a memory card etc., the printer may further include an external interface 19 such as a card reader. After the printer establishes USB communication with a computer as a printing device, the computer can access the external memory which serves as an extension of a FLASH memory of the printer and read files stored in the external memory,
wherein the first memory 15 may be also set inside or outside the printer, if set outside the printer, the first memory can be connected to the printer by an external interface (which may be the external interface 19 above or other independent external interfaces) of the printer. No matter set inside or outside the printer, the computer does not need to use a CD-ROM when installing a driver. In addition, the computer can manage or edit data in the memory conveniently.

The first memory 15 and the external memory 16 may be set at the same time, or one of them may be set. In the case that they are set at the same time, the external memory can store the driver or the product information only.

The external memory, as an extension of the FLASH memory of the printer, may store more information besides the device identification of the printer. As shown in Fig. 9, the external memory 16, due to its large memory capacity, is able to store not only a USB driver 161 and a product information file 162 such as a printer specification 1621, a printer programming manual 1622, a printer maintenance manual 1623 and a printer logo 1624 etc., but also other files such as a printer application etc.

What needs to be noted is that, the steps as shown in the flowcharts of the accompanying drawings may be executed in a computer system such as a group of computer-executable instructions. In addition, the steps may be executed according to sequences different from those as shown or described herein, although logical sequences have been shown in the flowcharts.

It can be seen from the description above that the invention is able to install a driver of a USB device conveniently, manage the memory area in the USB device and switch the type of a printing device easily.

The above is only the preferred embodiment of the invention and not intended to limit the scope of protection of the invention. For those skilled in the art, there may be various modifications and changes, and any modifications, equivalent replacements, improvements and the like within the spirit and principle of the invention shall fall within the scope of protection of the invention.

## Claims

1. A printer with a USB interface, comprising a USB interface (18) and a printing mechanism (12), **characterized by** further comprising:
a controller (13); and
a first memory (15), connected with the controller (13), storing a driver of the printer,
wherein the first memory (15) further stores a device identification, wherein the type of the device identification includes a memory device identification and a printing device identification.

2. The printer according to claim 1, **characterized by** further comprising: an input mechanism (11), connected with the controller (13), configured to receive a signal inputted by a user to enable the controller (13) to modify the type of the device identification in the first memory (15).

3. The printer according to claim 1, **characterized in that** the type of a default device identification in the first memory (15) is the memory device identification.

4. The printer according to claim 3, **characterized in that** the printer is connected to a computer (40) by the USB interface (18), wherein after the driver is installed by the computer (40), the device identification is modified to be a printing device identification.

5. The printer according to any one of claim 1 to 4, **characterized in that** the first memory (15) is set inside or outside the printer, in the case that the first memory (15) is set outside the printer, the first memory is connected to the printer by an external interface of the printer.

6. The printer according to any one of claim 1 to 4, **characterized in that** the first memory (15) further stores a product information file of the printer, or the printer further comprising: a second memory (16), connected to the printer by the external interface of the printer and storing the product information file and/or the driver of the printer.

7. A driver installing method of a printer with a USB interface, **characterized by** comprising:
when the printer is connected to a computer, the printer being identified as a memory device or a printing device, wherein the printer stores a device identification, wherein the type of the device identification includes a memory device identification and a printing device identification; and
in the case that the printer is identified as a memory device, the computer installing a driver stored in the printer.

8. The method according to claim 7, **characterized in that** the device type of the printer is modified by a signal inputted by a user.

9. The method according to claim 7, **characterized in that** when the printer is connected to the computer for the first time, the device type of the printer is a memory device; after the driver is installed by the computer, the method further comprising: the computer modifying the device type of the printer to be a printing device.

10. The method according to claim 7, **characterized in that** when the printer is connected to the computer, the method further comprising:
in the case that the printer is identified as a memory device, the computer determining whether or not to install the driver in the printer;
if the determination result is yes, the computer installing the driver and modifying the device type of the printer to be a printing device; and
if the determination result is no, the computer not modifying the device type of the printer, and the printer establishing communication with the computer to execute a predetermined operation.

11. The method according to any one of claims 7 to 10, **characterized in that** the method further comprising:
the printer receiving a control signal inputted by the user; and
the printer modifying the device type through the control signal.

12. A driver installing system of a printer with a USB interface, **characterized by** comprising:
a computer; and
a printer connected with the computer by the USB interface,
wherein the computer identifies the printer as a memory device or a printing device; in the case that the printer is a memory device, the computer installs a driver stored in the printer.
